## Europäisches Patentamt
## European Patent Office
## Office européen des brevets

(11) Publication number: **0 075 266**
**B1**

(12) **EUROPEAN PATENT SPECIFICATION**

(45) Date of publication of patent specification: **15.07.87**

(51) Int. Cl.⁴: $F\ 02\ D\ 21/08$, $G\ 05\ D\ 16/06$

(21) Application number: **82108505.7**

(22) Date of filing: **15.09.82**

(54) **Exhaust gas recirculation (EGR) system with a vacuum regulator in an automotive vehicle.**

(30) Priority: **21.09.81 DE 8127587 u**
**31.03.82 PCt/us82/00407**

(43) Date of publication of application:
**30.03.83 Bulletin 83/13**

(45) Publication of the grant of the patent:
**15.07.87 Bulletin 87/29**

(84) Designated Contracting States:
**DE FR GB IT SE**

(56) References cited:
**EP-A-0 028 152**
**DE-A-2 652 983**
**GB-A-2 031 515**
**GB-A-2 065 223**
**US-A-3 915 136**
**US-A-4 369 753**

**INGENIEURS DE L'AUTOMOBILE, no. 6,**
**September/October 1980, pages 55-60,**
**Boulogne-Billancourt, FR. M.J. PEREZ:**
**"Optimisation d'un véhicule Diesel suralimenté**
**du point de vue des émissions à**
**l'échappement"**

(73) Proprietor: **Ranco Incorporated**
**601 West Fifth Avenue**
**Columbus Ohio 43201 (US)**

(72) Inventor: **Piesche, Günter, Dipl.-Ing.**
**Westring 20**
**D-7521 Ubstadt-Weiher (DE)**

(74) Representative: **Lehn, Werner, Dipl.-Ing. et al**
**Hoffmann, Eitle & Partner Patentanwälte**
**Arabellastrasse 4**
**D-8000 München 81 (DE)**

(56) References cited:
**PATENTS ABSTRACTS OF JAPAN, vol. 5, no.**
**116(M-80)(788), 25th July 1981**

**PATENTS ABSTRACTS OF JAPAN, vol. 6, no.**
**93(M-133)(971), 29th May 1982**

Courier Press, Leamington Spa, England.

## Description

The present invention relates to exhaust gas recirculation (EGR) and more particularly relates to EGR control systems for use with automotive engines.

The invention particularly relates to an exhaust gas recirculation (EGR) system in an automotive vehicle having an internal combustion engine comprising a vacuum pressure source, an EGR valve assembly operable to recirculate exhaust gas to the engine air intake in relation to the degree of valve operating vacuum pressure communicated thereto, and a vacuum regulator or valve controller for supplying a modulated vacuum control signal to the EGR valve assembly, said vacuum regulator or valve controller comprising a housing defining an output port communicated with the EGR valve assembly, a first input port communicating with the vacuum pressure source, and a second input port communicating with ambient atmospheric pressure, a regulator valve valving means in said housing including a control member upon which a differential pressure force between the output pressure and ambient atmosphere pressure acts, an input means responsive to the movement of an associated engine component for exerting an actuation force on said control member, and a force transmitting element between said input means and said control member for applying a force to said control member depending on the position of said input means, such a system and especially vacuum regulator or valve controller for use therein is known from EP—A—28 152.

Systems for controlling EGR in spark ignition engines have been in use for many years.

EGR in spark ignition engines reduces the emission of oxides of nitrogen ($NO_x$) from the engines, thus minimizing harm to the environment from these gases. Typical EGR control systems constructed for use with spark ignition engines utilize engine intake manifold vacuum, in one way or another, for providing actuating power for controlling positioning of the EGR valve itself. Because intake manifold vacuum levels are indicative of operating conditions of the engine, the intake manifold vacuum level was also sometimes used by prior art systems as a control parameter tending to indicate the degree of opening of the carburetor throttle valve at a given load. Examples of such EGR control systems are disclosed by US—A—3,884,200, US—A—3,739,797 and US—A—3,970,061 among others.

The output of a vacuum regulator as mentioned above is a vacuum in the vacuum chamber controlled dependent on the counter-force, with the aid of which pressure driven exhaust gas recirculation valve (EGR valve) in the exhaust gas recirculation system of a motor vehicle with internal combustion engine is controlled, such as described for example in US—A—3,970,061.

Diesel engines have not been considered to emit significant amounts of $NO_x$; however, in recent times the amounts of $NO_x$ entering the atmosphere from the exhaust of diesel engines has increased, at least in relative terms, and therefore the use of EGR control valves in diesel engines to reduce $NO_x$ emissions has become desirable.

Diesel engines differ from spark ignition engines in a number of important ways, one being that the diesel engine does not include a valved, or throttled, intake manifold into which the combustion air is induced through a throttle valve. Diesel engines induce combustion air through manifold-like ducts; but the amount of gas induced is substantially constant in all operating conditions of the engine. Accordingly the vacuum pressure existing in a diesel engine intake duct, is slight at most. The source of vacuum pressure provided by the intake manifold of a spark ignition engine is therefore not available in a diesel engine.

Diesel engines utilized in automotive vehicles are often constructed and arranged to drive small vacuum pumps which form a source of operating vacuum pressure for various pneumatically operated components of the vehicle. The auxiliary vacuum pumps produce vacuum pressure levels adequately great to operate EGR valves for controlling recirculation of engine exhaust gas to the engine intake ducts.

In a diesel engine the engine speed under a given load is controlled by the quantity of fuel injected into the engine combustion chambers and accordingly the "throttle" of the diesel engine is considered to ^be a manually operated foot pedal connected by a linkage to a fuel pump for supplying the engine fuel injectors. The foot operated pedal is actuated to govern the quantity of fuel delivered by the fuel pump to the combustion chambers of the engine and thus controls the engine speed under a given load.

Since the gas induced into the combustion chamber remains constant while the quantity of fuel introduced into the combustion chamber varies, the production of $NO_x$ varies as a function of throttle setting. This being the case, EGR valves associated with diesel engines can be controlled in relation to operation of the engine throttle.

The present invention is based on the object of providing a new and improved EGR control system for diesel engines wherein the EGR valve is provided with operating pressure varying as a predetermined function of the engine throttle position setting and thus enables close control over the recirculation of exhaust gas in the engine.

The invention is further based on the object of providing a vacuum regulator in the above-described system type, which, while being of simple construction and not needing additional switching valves, dependent on different positions of a control lever permits a control of the vacuum in such a manner that the vacuum abruptly goes over to atmospheric pressure upon a certain position of the control lever.

Such a vacuum regulator is especially used in exhaust gas recirculation systems of motor vehicles wherein the gas pedal in connection with the throttle flap adjustment lever or injection pump adjustment lever of a diesel injection pump is connected with the control lever for the counter-force.

The object of the invention is solved by the features of the characterizing part of claim 1, whereas further developments of the invention appear from claims 2 to 8.

Specifically an EGR system for an automotive vehicle diesel engine is provided wherein an EGR valve assembly is operable to recirculate exhaust gas to the engine air intake in relation to the degree of operating vacuum pressure communicated to the EGR valve by an EGR valve controller responsive to the engine throttle position. The EGR valve controller comprises a regulator and a throttle position responsive regulator actuator. The regulator includes a regulator control member movable to control communication between an output port communicating with the EGR valve and input ports communciating with a vacuum pressure source and with atmospheric pressure. The control member is acted upon by differential pressure force between the output port pressure and atmospheric pressure and is also acted upon by actuating force exerted on it by the throttle position responsive actuator. Hence the control member can be stabilized to produce a given output pressure to the EGR valve in response to a given throttle position. The throttle position responsive actuator preferably comprises a lever driven cam and a resiliently deflectable force transmitting element between the cam and the regulator control member for applying force to the control member which depends upon the position of the lever. The force transmitting element changes the force applied to the control member in response to a change in the cam position with the control member moving in response thereto to establish a changed output pressure to the EGR valve at which the forces acting on the control member are again balanced.

The new EGR control system is constructed to be mounted conveniently on the engine or components thereof and is provided in a small yet rugged and inexpensive housing which is communicated to associated parts by small flexible hoses and the like.

With a construction according to the invention, the vacuum delivered by the vacuum regulator abruptly goes over to atmospheric pressure for example in the position of the control lever according to the idle position of the gas pedal of an internal combustion engine, no additional switching valves being necessary for this control.

The additional pressure cam is expediently adjustable in its point of action with the spring element, whereby different triggering points for the abrupt control of the vacuum to atmospheric pressure can be adjusted. The additional pressure cam is advantageously constructed as adjustment screw.

The leaf spring is expediently constructed as double-armed spring with two fastening members provided along the one spring arm which are integrally formed with the leaf spring. This provides a positioning of the leaf spring which is especially insensitive to vibration.

Other features and advantages of the invention will become apparent from a consideration of the following detailed description made with reference to the accompanying drawings which form a part of the specification. In the drawings

Fig. 1 is a schematic illustration of an EGR control system for an automotive diesel engine embodying the present invention,

Fig. 2 is a perspective view of an EGR valve controller or vacuum regulator embodying the invention,

Fig. 3 is a partial cross sectional view seen approximately from the plane indicated by the line III—III of Fig. 2 with parts shown in alternate positions,

Fig. 4 is a cross sectional view seen approximately from a vertical plane of Fig. 3 with portions broken away,

Figs. 5 and 6 are views similar to Fig. 4 with parts shown in alternate positions,

Fig. 7 is a cross section view seen approximately from a horizontal plane of Fig. 3,

Fig. 8 is a graphic illustration of operation of a device constructed according to the invention,

Fig. 9 is a partial sectional view of a vacuum regulator according to the invention with non-adjustable additional pressure cam,

Fig. 10 is a plan view of a leaf spring in a vacuum regulator according to the invention,

Fig. 11 is a partial sectional view of a vacuum regulator according to the invention with adjustable additional pressure cam, and

Fig. 12 is the vacuum output characteristic of a vacuum regulator according to Figs. 9 to 11.

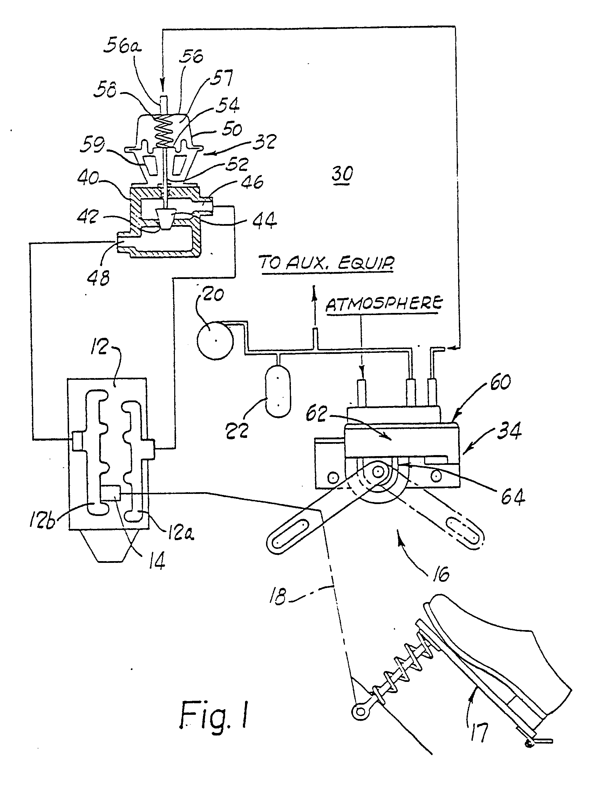

An automotive vehicle is partially illustrated in Figure 1 of the drawings as comprising a diesel engine 12, a fuel pump 14 for supplying fuel to be injected into the engine combustion chambers, and a throttle system 16 for controlling the amount of fuel directed by the pump 14 to the engine. The throttle system 16 is illustrated as comprising a foot-operated pedal 17 and a linkage 18 between the pedal 17 and the fuel pump 14. The vehicle 10 additionally includes a source of actuating vacuum pressure for operating various components associated with the vehicle. In the preferred embodiment an engine driven vacuum pump 20 is associated with a vacuum reservoir tank, or accumulator, 22; the pump and reservoir tank forming the vacuum pressure source. The engine, fuel pump, throttle system, vacuum pump, and reservoir tank may all be of any conventional or suitable construction and therefore are schematically illustrated and not described in detail.

An EGR system 30 constructed according to the invention recirculates controlled amounts of engine exhaust gas from the engine exhaust manifold 12a to the engine intake ducts 12b as a function of the engine throttle system setting. The EGR system 30 comprises an EGR valve assembly 32 for controlling the EGR flow and an EGR valve controller 34 for governing operation of the EGR valve assembly 32 by supplying controlled operating vacuum pressure to the valve assembly 32 depending upon the condition of the engine throttle system 16.

The EGR valve assembly 32 provides modulated flows of exhaust gas to the engine intake. The assembly 32 is of generally conventional construction and as illustrated by Figure 1 includes a cross-over valve housing 40 containing a valve seat 42 and a poppet valving member 44 coacting with the seat 42 to control the flow through the valve housing 40. A valve housing inlet port 46 communicates with the exhaust manifold 12a and a housing outlet port 48 communicates with the intake duct 12b. When the poppet valving member 44 moves from the seat 42 exhaust gas flows through the valve housing 40 to the intake ducts.

The poppet valving member 44 is moved relative to the seat 42 by a vacuum operated valve actuator 50 which positions the poppet valving member 44 to maintain a controlled EGR flow. The valve actuator 50 comprises a poppet stem 52 extending from the valving member 44 through a seal in the wall of the housing 40 to an actuating diaphragm assembly 54. The diaphragm assembly 54 is hermetically attached to the rim of a cup-like housing so that the diaphragm and cup form a chamber 57. A helical compression spring 58 in the chamber 57 reacts between the diaphragm assembly 54 and the cup 56 to bias the valving member 44 toward engagement with the seat 42. The cup 56 is provided with a vacuum port 56a through which EGR valve actuating vacuum is communicated from the controller 34.

The diaphragm assembly 54 and cup 56 are supported on the valve housing 40 by a supporting bracket 59 having spoke-like legs which expose the side of the diaphragm assembly 54 opposite the chamber 57 to atmospheric pressure. When vacuum pressure is communicated to the chamber 57 the diaphragm assembly 54 is moved by the applied differential pressure force acting on it against the force of the spring 58 and disengages the poppet valve member 44 from the seat 42. The flow of exhaust gas through the valve housing 40 is controlled by the degree of EGR valve opening which depends upon the level of vacuum pressure in the chamber.

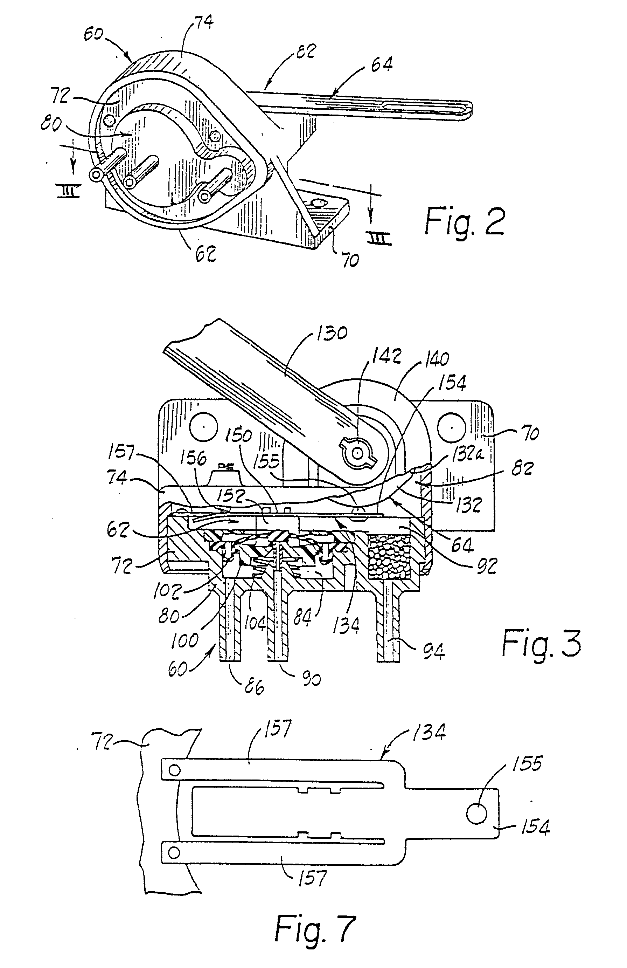

The EGR valve controller 34 is effective to produce output vacuum pressure for actuating the EGR valve assembly 32 from the vehicle vacuum pressure source in relation to operation of the engine throttle system 16. The EGR valve controller 34, illustrated by Figures 2—7, comprises a housing assembly 60, a regulator 62 and a regulator actuator 64. The regulator 62 is disposed in the housing 60 in communication with the vehicle vacuum source and the EGR valve assembly. The regulator actuator 64 is supported by the housing and coacts with the throttle system 16 and the regulator 62.

Referring to Figures 2 and 3 the housing assembly 60 comprises a bracket-like support base 70 and a pair of die cast interfitting housing members 72, 74 attached to each other. The housing castings interfit and are preferably assembled together and then staked or crimped to maintain them assembled. The housing assembly thus constructed defines a regulator section 80 and an actuator section 82. The regulator section 80 defines an output pressure chamber 84 communicable with the EGR valve assembly 32 via an output port 86, an input port 90 communicating with the vacuum source, and an atmospheric pressure chamber 92 communicating with ambient atmospheric pressure via an input port 94.

The regulator 62 is disposed in the regulator section 80 and controls communication of the output chamber 84 with the input vacuum and the atmospheric pressure chamber, respectively, to govern the EGR valve operating output pressure produced in the chamber 84 and thus control the position of the EGR valve.

Referring to Figures 3—6 the preferred regulator 62 comprises a control member 100 movable to control communication between the output port and the input ports to govern the EGR valve operating pressure level. The illustrated regulator 62 comprises the control member 100, in the form of a movable valve body, a flexible diaphragm 102 supporting the valve body 100, a biasing spring 104 reacting against the valve body 100, a fixed valve body 106, and a valving member 108 coacting with the movable valve body 100 and the fixed valve body 106.

The control member valve body 100 is preferably an annular member defining a central valve body port extending axially through it and a valve seat 112 extending about the port for engagement with the valving member 108.

The fixed valve body 105 is preferably a thin walled rigid tube disposed within the control member valve body port and projecting from the input vacuum port 90 through the output pressure chamber 84. The fixed valve body tube is supported by the housing member 72 and sealed to the housing member to prevent leakage between the input port and the output chamber. The fixed valve body 106 defines an annular valve seat 118 at its projecting end which is sealingly engageable with the valving member 108. The diameter of the fixed valve body tube is smaller than the control member valve body portion to permit flow between them.

The valving member 108 is preferably a button-like structure molded integrally with the diaphragm 102 and urged resiliently toward sealing engagement with the seat 112 by narrow tongue-like strips of material (see Figure 3) continuous with the valving member 108 and the diaphragm 102. The diameter of the member 108 is greater than that of the seat 112 so the member 108 can sealingly engage the seat 112.

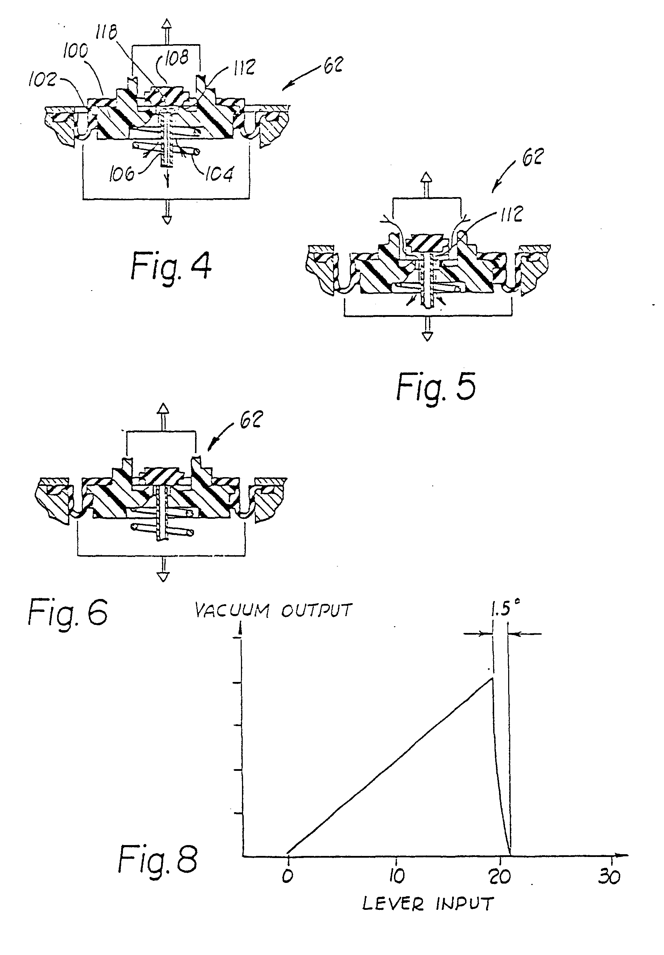

The output pressure chamber 84 is alternatively communicable with the input vacuum pressure and the atmospheric pressure chamber 92 to alter the output pressure to the EGR valve assembly 32. When the valve body 100 moves in a direction away from the output chamber 84, as shown by Figure 4, the valving member 108 is carried by the valve body 100 so that it is and remains sealingly engaged on the seat 112 while being disengaged from the annular seat 118 formed by the end of the fixed valve body 106. This results in direct communication between the vacuum pressure source and the output pressure chamber 84 via the valve body 106 causing reduction of the pressure in the chamber 84 as it is evacuated.

When the control member valve body 100 moves toward the output chamber 84 (see Figure 5) the valving member 108 sealingly engages the fixed valve body seat 118 so that continued movement of the movable valve body 100 disengages the seat 112 from the valving member 108 causing atmospheric air to flow from the atmospheric pressure chamber 92 through the movable valve body seat 112 and into the output chamber 84.

The position of the movable valve body 100 is determined by forces acting on it applied by the regulator actuator 64, the biasing spring 104 and a feedback force created by differential pressure acting across the valve body 100 and the diaphragm 102 between the chambers 84, 92. The spring 104 biases the valve body 100 away from the chamber 84, tending to cause the valve body seat 112 to lift the valving member 108 away from the seat 118 and communicate the output chamber 84 with the vacuum source. The spring force is opposed by both the regulator actuator force and the feedback force.

The feedback force is created by differential pressure acting on the effective area provided by the diaphragm 102 and the valve body 100. The diaphragm 102 is sealed about its outer perimeter to the housing member 72 and is sealed to the valve body 100 about its inner perimeter. Thus the diaphragm and valve body form a movable wall between the output and atmospheric air chambers so that a feedback force which varies according to output pressure is exerted on the valve body 100.

The regulator actuator and feedback forces are altered relative to each other so that they tend to balance the biasing spring force and the valve body 100 tends to be positioned with the valving member 108 blocking communication between the output chamber 84 and both the vacuum source and the chamber 92.

For example, when the actuator force applied to the valve body 100 increases, tending to move the valve body 100 from the position illustrated by Figure 6, the regulator output vacuum decreases thus reducing the differential pressure feedback force on the valve body 100 so that the valve body 100 returns to the position illustrated by Figure 6. If the regulator actuator force is decreased, tending to shift the valve body 100 to its position illustrated by Figure 4, the regulator output vacuum is increased, increasing the differential pressure feedback force acting on the valve body 100 and resulting in the valve body 100 being again positioned as illustrated by Figure 6.

The differential pressure feedback force acting on the valve body 100 and the diaphragm 102 thus provides degenerative feedback in the form of a stabilizing force which changes in magnitude to oppose any unbalanced regulator actuator force on the valve body 100 so that the valve body 100 always tends to remain essentially stationary and in the position illustrated by Figure 6.

The regulator actuator 64 is best illustrated by Figures 2, 3 and 7 and provides a controlled actuating force applied to the control member valve body 100 in response to engine throttle system settings to thus control the EGR valving member position. The regulator actuator 64 comprises an engine throttle system engaging lever 130 drivingly connected to a regulator controlling cam 132 which exerts a lever position responsive force on the regulator member 100 via a resilient force transmitting element 134.

As is best illustrated in Figures 2 and 3, the housing member 74 is formed with an integral bearing block projection 140 supporting a drive shaft 142 for rotation relative to the housing member. The cam 132 is keyed to the drive shaft 142. One end of the shaft 142 projects from the bearing block 140 and is keyed to the lever 130. The bearing block 140 encloses the cam 132 so that the chamber 92 is not exposed to dirt, dust, etc present in the environment of the housing 60.

The force transmitting element 134 is preferably a leaf spring having its midsection 150 engaging arms 152 projecting from the regulator member 100 into the atmospheric pressure chamber 92. The ends of the arms 152 are formed with guide projections extending loosely through guide slots in the spring element. The lead spring element 134 defines a cam follower section 154 projecting cantilever fashion to the cam 132 from the arms 152. The preferred cam follower construction employs a bearing ball 155 seated in a pierced hole formed in the spring material. The ball 155 is trapped between the cam and the spring by the resilient spring forces applied to it. The hardness and wear resistance of the ball 155 assures low friction, abrasion free engagement between the cam and element 134.

The opposite end of the spring element 134 projects cantilever fashion from the arms 152 to a calibration screw 156 which is threaded into the housing member 74 and bears on the spring element 134. The calibration screw is adjusted during manufacture of the valve controller and then sealed in place in the housing member 74.

The spring element 134 is supported in the housing by arms 157 extending parallel to the main body of the spring element and riveted to the housing member 72. The arms 157 are narrow and readily flexible so that they support the spring element in place but do not contribute in any material way to the spring function of the element.

As the throttle system is operated to control the engine speed, the cam 132 is rotated by the lever 130 and drive shaft 142 to vary the force exerted by the leaf spring element 134 on the regulator control member 100. This in turn alters the controller output vacuum communicated to the EGR valve assembly by an amount dependent upon the positioning of the throttle system. When the output vacuum reaches its adjusted level the regulator control member 100 is returned to its position illustrated by Figure 6 with the leaf spring element 134 deflecting to accommodate the small amount of regulator control member movement required. The spring element 134 is preferably formed from stainless sheet stock so that it is quite stiff.

In the illustrated EGR system the controller output vacuum pressure varies as a function of the throttle system setting in the manner illustrated graphically by Figure 8. When the throttle is "closed," i.e., when the throttle system is positioned to prevent injection of fuel to the engine, the lever 130 is in an initial (zero degree) position which conditions the regulator against producing any vacuum output to the EGR valve assembly 32. No recirculation of exhaust gas occurs.

As the throttle system is actuated to increase the supply of fuel to the engine, the vacuum output from the EGR valve controller 34 increases essentially as a linear function of the angular lever movement from the initial lever position indicated at 0° on the graph of Figure 8. The output of the valve controller is set at "zero" vacuum during manufacture by moving the lever 130 to its initial position and advancing the calibration screw 156 against the leaf spring element 134 until the force exerted on the regulator control valving member 100 by the leaf spring 134 overcomes the biasing force of the spring 104 to just move the control valving member to the position indicated by Figure 5 of the drawings.

As the lever 130 is moved angularly from its initial position, the force exerted by the cam 132 on the spring element 134 is diminished at a rate determined by the shape of the cam periphery which, in the illustrated embodiment, is shaped to provide for the aforementioned linear increase in output vacuum as a function of angular displacement of the lever 130 from its initial position.

When the throttle approaches its "wide open" position in which the fuel supplied to the engine is nearly maximum, the production of $NO_x$ by the engine is minimum and EGR is neither necessary nor desirable. Accordingly, when the throttle system reaches a predetermined position, the output vacuum from the EGR valve controller is reduced precipitously to zero, resulting in the EGR valve closing and preventing further recirculation. The reduction of output vacuum level is accomplished by a lobe 132a on the cam 132 which, when the lever 130 has been rotated, say, 20 degrees from its initial position, is moved into engagement with the leaf spring element 134 causing an abrupt increase in the force exerted by the leaf spring member 134 on the regulator control member. This force increase overcomes the biasing force of spring 104 and results in the regulator control member 100 being positioned as illustrated in Figure 5, the same as it was when the throttle was closed. The cam lobe 132a is configured to exert sufficient force on the leaf element 134 to positively insure the regulator control member 100 remains fixed in its position illustrated by Figure 5 as the lever 130 continues to be rotated beyond 20 degrees from its initial position.

It should be apparent from the foregoing description that the vacuum output provided by the valve controller 34 can be programmed to vary as any reasonable function of the lever rotation by the throttle system since the valve controller output vacuum can be governed wholly as a function of the shape of the cam 132. Hence, the EGR control system can be used to control EGR in virtually any diesel engine by making relatively minor constructional adjustments primarily to the cam 132.

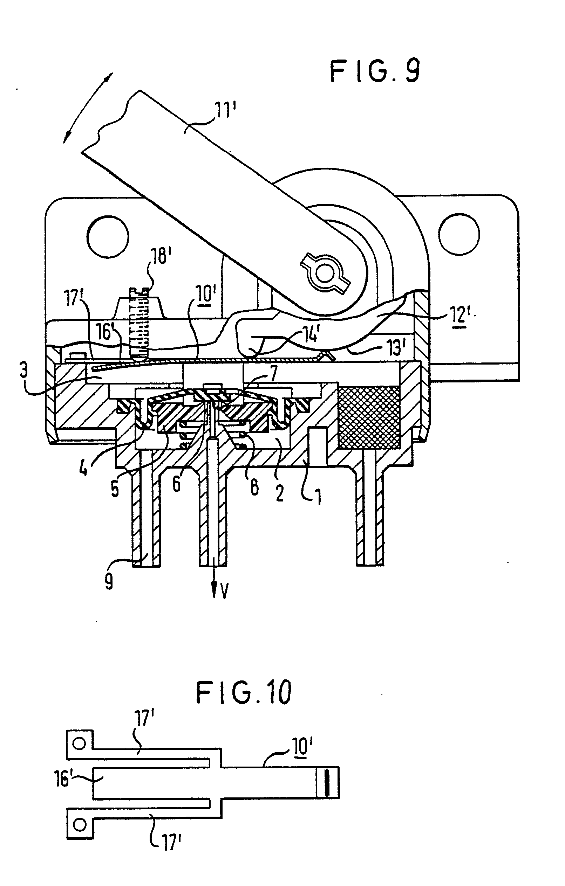

The vacuum regulator shown in Figure 9 includes a housing 1 with a vacuum chamber 2 and an atmospheric pressure chamber 3. Between the vacuum chamber 2 and the atmospheric pressure chamber 3 a diaphragm 4 with an auxiliary sealing disc 5 movable in relation thereto is disposed. A through port 6 in the auxiliary sealing disc 5 connects the atmospheric pressure chamber 3 and the vacuum chamber 2. Depending on the position of the auxiliary sealing disc 5 with respect to the diaphragm 4, the through port 6 is opened or closed by the diaphragm 4. Depending on its position the diaphragm 4 also closes a vacuum input port 7 in the vacuum chamber 2, which leads to a source of vacuum $\Delta V$ not shown. A helical pressure spring 8 presses the auxiliary sealing disc 5 towards the diaphragm 4. The vacuum chamber 2 has a vacuum output port 9, at which the controlled vacuum appears.

In the atmospheric pressure chamber 3, a leaf spring 10' fastened to the housing 1 is provided, which is in connection with the auxiliary sealing disc 5 and presses down same against the force of the helical pressure spring 8. A pressure cam disc 12' connected for fixed rotation with a control lever 11' pivotally positioned in the housing 1, and with a cam curve 13' acts upon the leaf spring 10' and presses same to a greater or lesser degree towards the helical pressure spring 8, depending on position of the control lever 11'.

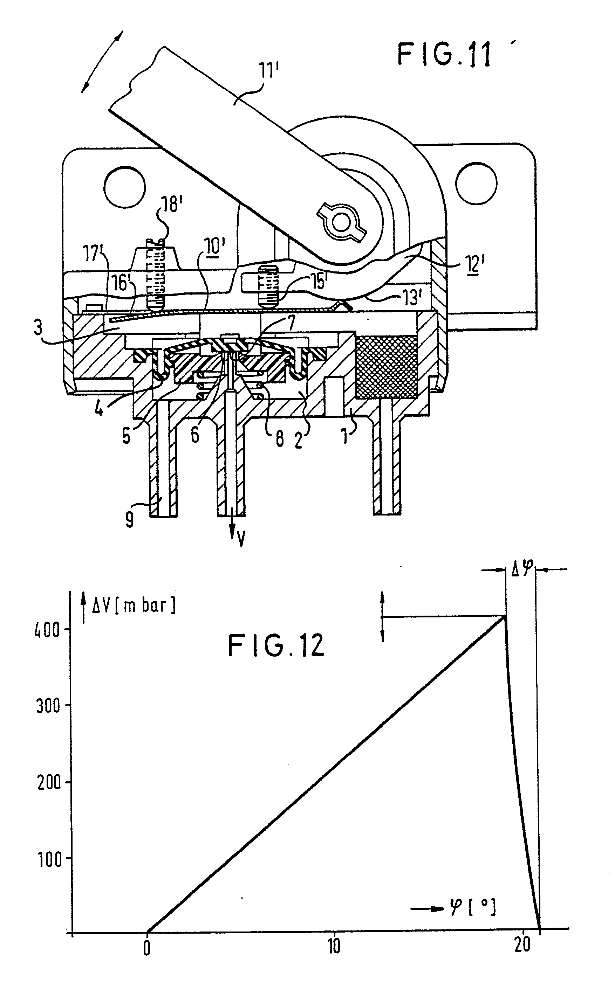

On the pressure cam disc 12' an additional pressure cam 14' is further provided outside the cam curve 13', said pressure cam 14' pressing down the leaf spring in addition to the depression effected by the cam curve 13' in such a manner that the auxiliary sealing disc 5 is pressed upon a slight control lever rotation into its lowermost position against the helical pressure spring 8. In the embodiment of the vacuum regulator shown in Figure 11, the additional pressure cam 14' is constructed as adjustable pressure cam in the form of an adjustment screw 15'.

Figure 10 shows a leaf spring 10' in plan view.

The leaf spring 10′ is constructed as two-armed spring with two fastening members 17′ provided along the one spring arm 16′ integral therewith. By means of this construction, the leaf spring 10′ is especially insensitive to vibration.

At the end of the leaf spring 10′ opposite to the point of action of the pressure cam disc 12′ means is provided over the spring arm 16′ thereof for adjusting the spring bias in the form of an adjustment screw 18′.

The vacuum regulator is designed in such a manner that in the position of the control lever 11′ shown in Figures 9 and 11, the maximum vacuum $\Delta V$ as compared to atmospheric pressure occurs. If the control lever 11′ is moved towards the right into the position shown in Figures 9 and 11 the auxiliary sealing disc 5 is pressed down so that the through port 6 is opened and the vacuum chamber 2 is brought into communication with the atmospheric pressure chamber 3. The vacuum in the vacuum chamber 2 as compared to the atmospheric pressure, also acting via the diaphragm on the auxiliary sealing disc 5, decreases until the auxiliary sealing disc 5 is again raised into the position opposite to the diaphragm 4 in which the through port 6 is closed via the diaphragm 4. Thus a balance has become established upon a lower vacuum $\Delta V$ in the vacuum chamber 2.

If the control lever 11′ is pivotted from the position shown in Figures 9 and 11 towards the left, the additional pressure cam 14′ or the adjustment screw 15′, respectively, presses the leaf spring upon a lever rotation about a very small angle $\varphi$, for example 1.5°, and thus presses the auxiliary sealing disc 5 into a downward position in which a complete pressure compensation of the vacuum $\Delta V$ in the vacuum chamber 2 as compared to atmospheric pressure takes place.

Such a vacuum output characteristic is shown in Figure 12, in which the vacuum $\Delta V$ in the pressure chamber 2 is shown as compared to atmospheric pressure via the angle of rotation $\varphi$ of the control lever 11′. The curve of the vacuum and the maximum value thereof can be determined by the choice of the cam curve 13′ of the pressure cam disc 12′. The drop in vacuum, caused by the additional pressure cam 14′ or the adjustment screw 15′, respectively, can be altered by shifting the point of action of this pressure cam 14′ or the adjustment screw 15′ in the direction of the leaf spring.

The construction of the vacuum regulator according to the invention with the leaf spring being fixed has a high vibrational stability, whereby at two unloaded ends there is no influence on the output vacuum $\Delta V$. Merely by varying the point of contact of the adjustment screw 18′ in the leaf spring plane is it possible to either adjust tolerances or to achieve different output characteristics.

Normally there is a limit in the gradient of the change of vacuum versus the rotation of the control lever. This means that a complete "switch-off" of the vacuum $\Delta V$ over a short rotation, for instance 1°, as e.g. is required in "switch-off" of an exhaust gas recirculating valve (EGR valve) actuating vacuum on idling in a diesel engine, is not possible by changing the cam curve 13′.

In the vacuum regulator according to the invention, an additional pressure cam 14′ combined with the pressure cam disc 12′ is used, which is touching the leaf spring 10′ on a certain point which allows a short lever movement by means of the leaf spring 10′ more or less as lever, hereby overriding the regulator, and by an abrupt movement of the auxiliary sealing disc 5 opens the vacuum chamber 2 to atmospheric pressure. The vacuum input port 7 is closed under this condition so that a vacuum consumption on idling is avoided.

The touch point of the additional pressure cam 14′ or the adjustment screw 15′, respectively, can be easily been chosen by means of the adjustment screw 18′ in order to vary the amount of the maximum vacuum, or the actuation radius of the additional pressure cam 14′ can be modified in order to achieve another gradient of the drop in vacuum versus the control lever rotation.

**Claims**

1. Exhaust gas recirculation (EGR) system in an automotive vehicle having an internal combustion engine comprising a vacuum pressure source (20, 22), an EGR valve assembly (32) operable to recirculate exhaust gas to the engine air intake in relation to the degree of valve operating vacuum pressure communicated thereto, and a vacuum regulator or valve controller (34) for supplying a modulated vacuum control signal to the EGR valve assembly (32), said vacuum regulator or valve controller (34) comprising:

— a housing (1, 60) defining an output port (9, 86) communicating with the EGR valve assembly (32), a first input port (7, 90) communicating with the vacuum pressure source (20, 22), and a second input port (94) communicating with ambient atmospheric pressure,

— a regulator valve valving means in said housing (1, 60) including a control member (5, 100) upon which a differential pressure force between the output pressure and ambient atmospheric pressure acts,

— an input means responsive to the movement of an associated engine compoment for excerting an actuation force on said control member (5, 100), and

— a force transmitting element (10′, 134) between said input means and said control member (5, 100) for applying a force to said control member (5, 100) depending on the position of said input means, characterized in that

a) said engine is a diesel engine (12) including a throttle system (16) actuable to control the engine speed and being said engine component, and a vacuum pump (20) driven by the engine and forming, at least in part, said vacuum pressure source (20, 22),

b) said control member (5, 100) is movable to control communication between said output port (9, 86) and said input ports (7, 90, 94),

c) said input means is a throttle position responsive means for altering the output pressure and comprises

— a lever (11', 130) connected to said throttle system (16),

— a cam (12', 132) supported by said housing (1, 60) and driven by said lever (11', 130),

— said force transmitting element (10', 134), and

— a spring member (8, 104) biasing said control member (5, 100) against said force transmitting element (10', 134),

d) said force transmitting element (10', 134) is a resiliently deflectable spring element between said cam (12', 132) and said control member (5, 100), said force transmitting element being effective to change the force applied to said control member in response to change in the cam position with said control member moving in response thereto to establish a changed output pressure to said EGR valve assembly (32) at which forces acting on said control members are balanced, and

e) said cam (12', 132) includes a lobe portion (132a) or an additional pressure cam (14', 15') outside a cam curve (13') effective to engage said spring element (10', 134) and produces a force on said control member (5, 100) which exceeds the force of said spring member (8, 104) for preventing said vacuum regulator or valve controller (34) from opening said EGR valve assembly (32) when said lever (11', 130) is in the position for maximizing the fuel applied to the engine.

2. EGR system as claimed in claim 1, characterized in that said housing (60) defines a lever supporting bearing portion (140), said cam (132) being supported by said bearing portion (140) within said housing (60).

3. EGR system as claimed in claim 1 or 2, characterized by an adjustably movable calibration element (18', 156) engageable with said spring element (10', 134) for adjusting the spring bias.

4. EGR system as claimed in claim 3, characterized in that said calibration element (18', 156) is an adjustment screw.

5. EGR system as claimed in claims 3 or 4, characterized in that said spring element (10', 134) is a leaf spring having a midsection (16', 150) engaging said control member (5, 100) and oppositely extending end portions resiliently engaging said cam (12', 132) and said calibration element (18', 156), respectively.

6. EGR system according to claim 5, characterized in that the leaf spring (10') is constructed as two-armed spring with two fastening members (17') provided along the one spring arm (16'), which are integral with the leaf spring.

7. EGR system according to any one of claims 1 to 6, characterized in that said additional pressure cam (15') is adjustable in its point of action with said spring element (10').

8. EGR system according to any one of claims 1 to 7, characterized in that said additional pressure cam is constructed as adjustment screw (15').

**Patentansprüche**

1. Auspuffgas-Rückführungssystem (AGR) für Kraftfahrzeuge mit einer Brennkraftmaschine, enthaltend eine Unterdruckquelle (20, 22), eine zum Zurückführen von Auspuffgas zum Motorlufteinlaß entsprechend der Größe des mit diesem verbundenen ventilbetätigenden Unterdrucks betreibbare AGR-Ventileinrichtung (32), und einem unterdruckregler oder einer Ventilkontrolleinrichtung (34) zum Zuführen eines modulierten Unterdruckkontrollsignals zu der AGR-Ventileinrichtung (32), wobei der Unterdruckregler oder die Ventilkontrolleinrichtung (34) folgendes enthält:

— ein Gehäuse (1, 60), das eine mit der AGR-Ventileinrichtung (32) verbundene Ausgangsöffnung (9, 86) und eine zweite, mit dem umgebenden Atmosphärendruck verbundene Eingangsöffnung (94) definiert,

— eine Reglerventileinrichtung in dem Gehäuse (1, 60) mit einem Steuerglied (5, 100), auf dem eine Differentialdruckkraft zwischen dem Ausgangsdruck und dem umgebenden Atmosphärendruck wirkt,

— eine Eingangseinrichtung zum Ausüben einer Betätigungskraft auf das Steuerglied (5, 100) im Ansprechen auf die Bewegung eines zugehörigen Motorteils

— und ein Kraftübertragungselement (10', 134) zwischen der Eingangseinrichtung und dem Steuerglied (5, 100) zum Aufbringen einer Kraft an dem Steuerglied (5, 100) in Abhängigkeit von der Position der Eingangseinrichtung,

dadurch gekennzeichnet, daß

a) der Motor ein Dieselmotor (12) mit einem zum Steuern der Motordrehzahl betätigbaren Drosselsystem (16) ist, welches des Motorteil ist, und mit einer vom Motor angetriebenen und wenigstens teilweise die Unterdrucksquelle (20, 22) bildende Vakuumpumpe (20),

b) das Steuerglied zum Steuern der Verbindung zwischen der Ausgangsöffnung (9, 86) und den Eingangsöffnungen (7, 90, 94) bewegbar ist,

c) die Eingangseinrichtung eine auf eine Drosselposition ansprechende Einrichtung zum Ändern des Ausgangsdrucks ist und

— einen mit dem Drosselsystem (16) verbundenen Hebelarm (11', 130),

— einen von dem Gehäuse (1, 60) unterstützten und von dem Hebelarm (11', 130) angetriebenen Nocken (12', 132),

— das kraftübertragende Element (10', 134) und

— ein zum Vorspannen des Steuerglieds (5, 100) gegen das kraftübertragende Element (10', 134) wirkendes Federteil,

enthält,

d) das kraftübertragende Element (10', 134), ein nachgiebig ablenkbares Federelement zwischen Nocken (12', 132) und Steuerglied (5, 100) ist, wobei das kraftübertragende Element zum Ändern der an dem Steuerglied aufgebrachten Kraft entsprechend einer Änderung in der Nockenposition wirksam ist, das Steuerglied sich im Ansprechen darauf bewegt, um einen geänderten Ausgangsdruck zur AGR-Ventileinrichtung (32) zu erzeugen, bei dem die auf das Steuerglied wirkenden Kräfte ausgeglichen sind und

e) der Nocken (12', 132) ein Nockenteil (132a) oder einen zusätzlichen Drucknocken (14', 15') außerhalb einer Nockenscheibe (13') aufweist, der zum Angreifen an dem Federelement (10', 134) wirksam ist und eine Kraft an dem Steuerglied (5, 100) erzeugt, die größer als die Kraft des Federteils (8, 104) ist, zum Verhindern, daß der Unterdruckregler oder Ventilkontrolleinrichtung (34) die AGR-Ventileinrichtung (32) öffnet, wenn der Hebelarm (11', 130) in einer Stellung ist, um den dem Motor zugeführten Brennstoff auf ein Maximum einzustellen.

2. AGR-System nach Anspruch 1, dadurch gekennzeichnet, daß das Gehäuse (60) ein den Hebelarm unterstützendes tragendes Lagerteil (140) definiert, wobei der Nocken (132) von dem Lagerteil (140) innerhalb des Gehäuses (60) unterstützt wird.

3. AGR-System nach Anspruch 1 oder 2, gekennzeichnet durch ein verstellbar bewegliches, mit dem Federelement (10', 134) zum Einstellen der Federvorspannung in Eingriff bringbares Kalibrierelement (18', 156).

4. AGR-System nach Anspruch 3, dadurch gekennzeichnet, daß das Kalibrierelement (18', 156) eine Einstellschraube ist.

5. AGR-System nach Anspruch 3 oder 4, dadurch gekennzeichnet, daß das Federelement (10', 134) eine Blattfeder mit einem in Eingriff mit dem Steuerglied (5, 100) stehenden Mittelteil (16', 150) und mit in entgegengesetzter Richtung verlaufenden und in Eingriff mit den Nocken (12', 132) und dem Kalibrierelement (18', 156) stehenden Endteilen ist.

6. AGR-System nach Anspruch 5, dadurch gekennzeichnet, daß die Blattfeder (10') als doppelarmige Feder mit zwei entlang dem einen Federarm (16') vorgesehenen Befestigungsteilen (17') ausgebildet ist, welche einstückig mit der Blattfeder sind.

7. AGR-System nach einem der Ansprüche 1 bis 6, dadurch gekennzeichnet, daß der zusätzliche Drucknocken (15') in seinem Angriffspunkt mit der Blattfeder (10') einstellbar ist.

8. AGR-System nach einem der Ansprüche 1 bis 7, dadurch gekennzeichnet, daß der zusätzliche Drucknocken als Einstellschraube (15') ausgebildet ist.

**Revendications**

1. Système de recirculation des gaz d'échappement (RGE) sur un véhicule automoteur ayant un moteur à combustion interne comprenant une source de dépression (20, 22), une vanne assemblée RGE (32) agissant pour faire recirculer les gaz d'échappement jusqu'à l'entrée d'air du moteur en relation avec le degré de la dépression de manoeuvre de cette vanne qui lui est communiquée, et un régulateur de dépression ou contrôleur de vanne (34) pour fournir un signal de commande·à dépression modulée à la vanne assemblée RGE (32), ce régulateur de dépression ou contrôleur de vanne (34) comprenant:

— un corps (1, 60) définissant un orifice de sortie (9, 36) communiquant avec la vanne assemblée RGE (32), un premier orifice d'entrée (7, 90) communiquant avec la source de dépression (20, 22) et un second orifice d'entrée (94) communiquant avec la pression de l'atmosphère environnante,

— une valve à clapet de régulation montée dans ledit corps (1, 60) comprenant un élément de contrôle (5, 100) sur lequel agit la force d'une pression différentielle entre la pression de sortie et la pression atmosphérique environnante,

— un moyen d'admission sensible au mouvement d'un organe du moteur associé pour exercer une force de manoeuvre sur ledit élément de contrôle (5, 100), et

— un élément de transmission de force (10', 134) placé entre ledit moyen d'admission et ledit élément de contrôle (5, 100) pour appliquer une force à ce dernier en fonction de la position du moyen d'admission, caractérisé en ce que:

a) le moteur est un moteur Diesel (12) comprenant un système d'accélération (16) manoeuvrable pour contrôler la vitesse du moteur et constituant ledit organe de moteur, et une pompe à vide (20) entraînée par le moteur et constituant, au moins en partie, ladite source de dépression (20, 22),

b) l'élément de contrôle (5, 100) est mobile pour contrôler la communication entre l'orifice de sortie (9, 86) et les orifices d'entrée (7, 90, 94),

c) le moyen d'admission est un moyen sensible à la position de l'accélérateur pour modifier la pression de sortie et comprend:

— un levier (11', 130) relié fonctionnellement au système d'accélération (16),

— une came (12', 132) supporté par le corps (1, 60) et entraîné par ledit levier (11', 130),

— ledit élément de transmission de force (10', 134), et

— un ressort (8, 104) rappelant ledit élément de contrôle (5, 100) contre l'élément de transmission de force (10', 134), et

d) ledit élément de transmission de force (10', 134) étant un ressort incurvable élastiquement entre ladite came (12', 132) et ledit élément de contrôle (5, 100), l'élément de transmission de force étant effectif pour modifier la force appliquée à l'élément de contrôle en réponse à un changement de la position de la came avec ledit élément de contrôle se déplaçant en réponse afin d'établir pour la vanne assemblée RGE (32) une pression de sortie modifiée à laquelle les forces agissant sur l'élément de contrôle sont équilibrées et

e) ladite came (12', 132) comprend une partie de lobe (132a) ou une came de pression additionnelle (14', 15') en dehors d'un profil de came (13'), effectif pour s'engager avec ledit ressort (10', 134) et pour produire sur l'élément de contrôle (5, 100) une force qui excède la force dudit ressort (8, 104) afin d'empêcher le régulateur de dépression ou contrôleur de vanne (34) d'ouvrir la vanne assemblée RGE (32) quand le levier (11', 130) est à une position rendant maximale la quantité de combustible fournie au moteur.

2. Système RGE selon la revendication 1 caractérisé en ce que le corps (60) définit un palier (140) de support d'un levier, la came (132) étant supportée par ce palier (140) à l'intérieur du corps (60).

3. Système RGE selon les revendications 1 ou 2, caractérisé par un élément de calibrage (18', 156) mobile pour adjustement et s'engageant avec le ressort (10', 134) pour le réglage de la force de rappel de celui-ci.

4. Système RGE selon la revendication 3, caractérisé en ce que l'élément de calibrage (18', 156) est une vis réglable.

5. Système RGE selon les revendications 3 ou 4, caractérisé en ce que le ressort (10', 134) est un ressort à lame ayant une partie médiane (16', 150) s'engageant avec l'élément de contrôle (5, 100) et des parties extrêmes s'étendant en sens opposés et s'engageant élastiquement, respectivement, avec la came (12', 132) et l'élément de calibrage (18', 156).

6. Système RGE selon la revendication 5, caractérisé en ce que le ressort à lame (10') est réalisé comme un ressort à deux branches avec deux éléments de fixation (17') prévus le long d'une branche (16') et qui font partie intégrante de ce ressort à lame.

7. Système RGE selon l'une quelconque des revendications 1 à 6, caractérisé en ce que la came de pression additionnelle (15') est réglable pour ce qui est de son point d'action sur le ressort 10.

8. Système RGE selon l'une quelconque des revendications 1 à 7, caractérisé en ce que la came de pression additionnelle est constituée par une vis de réglage (15').

Fig. 1

Fig. 2

Fig. 3

Fig. 7

Fig. 4

Fig. 5

Fig. 6

Fig. 8

3

FIG. 9

FIG. 10

4

## FIG.11

## FIG.12